(19) **Europäisches Patentamt**

**European Patent Office**

**Office européen des brevets**

(11) **EP 1 555 202 A2**

(12) # EUROPEAN PATENT APPLICATION

(43) Date of publication:
**20.07.2005 Bulletin 2005/29**

(51) Int Cl.$^7$: **B62M 11/18**

(21) Application number: **05000697.2**

(22) Date of filing: **14.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **Shimano Inc.**<br>**Osaka 590-8577 (JP)** |
| (30) Priority: **16.01.2004 JP 2004009184** | (72) Inventor: **Urabe, Hiroyuki**<br>**Shimonoseki Yamaguchi (JP)** |
| | (74) Representative: **Wallinger, Michael, Dr.**<br>**Zweibrückenstrasse 2**<br>**80331 München (DE)** |

(54) **Internal speed changing hub for a bicycle**

(57) An internal speed changing hub is provided with a hub shaft 21 that is affixed to a frame, a drive part 22, a driven part 23, a planetary gear mechanism 24, a first one-way clutch 25, a second one-way clutch 26, a clutch control mechanism 27, first and second bearings 28, 29, third and fourth bearings 30, 31. The drive part is a tubular shape that can be connected to an input part. The driven part can be connected to an output part. The drive transmission mechanism has a planetary gear mechanism, and transmits rotation from the drive part to the driven part. The first one-way clutch transmits ro-

tation from the carrier in one direction to the driven part. The second one-way clutch can engage and disengage the drive part and the driven part. The first and second bearings are provided with first and second bearing cones 28b, 29b installed at intervals in the axial direction of the hub shaft; first and second bearing cups 28a, 29a disposed so they can oppose the positions of the first and second bearing cones of the driven part, respectively; and first and second ball bearings 28c, 29c installed so that both of these can make contact. The third and fourth bearings are installed so that the drive part can rotate freely relative to the hub shaft.

Fig. 2

EP 1 555 202 A2

## Description

This invention pertains to bicycle helps, and more specifically to internal speed changing hubs for bicycles which are installed in the bicycle frame, and which transmit rotation from the input part to the output part.

Two-speed internal speed changing hubs in the rear wheels of bicycles are well known, for example in Japanese Utility Model Publication JP 57-42792. Prior art internal speed changing hubs are provided with a hub shaft that can be fixed to the rear end of the frame, a drive part that can rotate around at the hub shaft, a driven part that is disposed in line with the drive part and which can be rotated around the hub shaft, and a drive transmission mechanism disposed on the inner circumference of the drive part. Sprockets can be installed on the outer circumference of the drive part, and the drive part is rotated by means of a chain, which transmits rotation from the pedals to the sprockets. A clutch mechanism that can engage and disengage is installed between in the drive part and the driven part. Also, a one-way clutch that transmits rotation in the direction of the carrier (advancing direction), is installed between the carrier and the driven part. The drive transmission mechanism comprises internal toothed gears formed on the inner circumference of the drive part, a sun gear formed on the outer circumference of the hub shaft, a carrier installed so that it rotates freely in the hub shaft, and planetary gears that mesh with the sun gear which is installed so that it freely rotates in the carrier and the internal toothed gears.

A left-right pair of first and second bearings is provided in between the driven part and the hub shaft. The first bearing comprises first and second bearing cones, first and second bearing cups provided in the driven part, and first and second ball bearings provided to make both of these contact each other. Although a first bearing cone is not indicated in the drawings in Utility Model JP 57-42792, typically the hub shaft is mounted so that the bearing contact can be adjusted. The second bearing cone is formed as a unit with the hub shaft. Further, third and fourth bearings are installed in between the drive part and the driven part as well as between the drive part and the hub shaft.

In the prior art configuration described above, the part that forms the sun gear is the part with the largest outer diameter of the hub shaft because the second bearing cone and the sun gear are made as a unit with the hub shaft. As a result, the parts on either side of the sun gear must be installed when the hub is assembled. For example, when the carrier is assembled, the internal drive part must be installed from the driven part-site into the hub shaft, taking the spacing into account. Thus, the second bearing cone on the driven side of the carrier must have an outer diameter that is smaller than that of the carrier, and the second bearing ends up having a small diameter. If the second bearing is small in diameter, the number of ball bearings that can be placed in between the bearing cone and the bearing cup become smaller. As a result, when the bearings are subjected to large loads, pressure becomes high on the bearing cone and the bearing cup, thereby shortening the service life of the bearings.

The task of this invention is to control the shortening of bearing service life due to high loads in internal speed changing hubs for bicycles, even when the sun gear and the hub shaft are formed as one unit.

Disclosure of Invention

The internal speed changing hub for according to the present invention comprises a hub that transfers the rotation from the input part to the output part shaft that is fixed to the bicycle frame, and is provided with a hub shaft, a drive part, a driven part, a power transmission mechanism, a first one-way clutch, a second one-way clutch, a clutch control mechanism, first and second bearings, and third and fourth bearings. The hub shaft is a shaft that can be fixed to the bicycle frame. The drive part is a tube-shape that can rotate around the hub shaft and can be connected to the input part. The driven part is disposed adjacent to the drive part, can rotate around the hub shaft, and can be linked to the output part. The drive transmission mechanism has at least one planetary gear disposed at separate intervals in the circumferential direction of the carrier that meshes with the sun gear and an inner toothed gear provided on the inside of the drive part that meshes with the planetary gear, and is a mechanism that transmits rotation from the drive part to the driven part. The first one-way clutch is a clutch that transmits rotation in one direction from the carrier to the driven part. The second one-way clutch is disposed between the drive part and the driven part, and is a clutch that can engage and disengage the drive part and driven part.

The clutch control mechanism is a mechanism for engaging and disengaging the second one-way clutch. The first and second bearings are bearings forming left-right pairs installed so that the driven part turns freely on the hub shaft, and have first and second bearing cones installed at separate intervals in the axial direction of the hub shaft, first and second bearing cups provided so they can be in positions opposing the first and second bearing cones of the driven part, respectively, as well as a plurality of first and second ball bearings installed so that contact can be made between the first and second bearing cones and the first and second bearing cups. The third and fourth bearings are bearings forming a left-right pairs installed so that the drive part turns freely on the hub shaft.

In this first embodiment, rotation is transmitted from a sprocket or other input part by means of a chain in this internal speed changing hub. Then drive rotation is directly transmitted to the driven part through the second one-way clutch when the second one-way clutch is engaged so that, for example, the wheel, etc., rotates at the same high rate of rotation as the drive part. When the second one-way clutch is in the disengaged condition, rotation is transmitted from the drive part to the internal toothed gear, the rotation of the internal toothed gear in transmitted to the planetary gear, and the carrier is decelerated and rotates [slower] than the drive part. This rotation is transmitted to the driven part by means of the first one-way clutch, and the output part rotates at low speed. So that the driven part is supported to rotate freely, in the second bearing disposed between the driven part and the hub shaft, the second bearing cone is separate from the hub shaft that is installed in the hub shaft [sic]. As a result, the bearing cone can be assembled after assembling the carrier, and the second bearing cone can have a diameter larger than it would be if it were formed as a unit with the hub shaft. Here, since the second bearing cone is separate from the hub shaft, the second bearing can have a large diameter, even if the sun gear is formed as a unit with the hub shaft, and the quantity of second ball bearings can be increased. Thus, the pressure generated by the second bearing cone and the second bearing cups is reduced, and the reduction in service life of the bearings as a result of high loads can be controlled.

In the internal speed changing hub for a bicycle of the second embodiment, the driven part is disposed adjacently so that it partly overlaps the outside of the drive part, and the internal toothed gear is formed so that it is of a piece with the inside surface of the drive part. In this case, it is easy to locate the second one-way clutch that engages and disengages the drive part and the driven part in this area where the drive part and the driven part overlap. Moreover, it is easy to configure an internal toothed gear, thereby simplifying the overall configuration.

In the internal speed changing hub for a bicycle of the third embodiment, the third and fourth bearings listed in embodiments 1 and 2 has a third bearing cone provided in the driven part, and a fourth bearing cone installed in the hub shaft so that it can be freely removed, third and fourth bearing cups disposed at separate intervals in the drive part, as well as third and fourth ball bearings installed so that the third and fourth bearing cones and third and fourth bearing cups can be in contact. The carrier is supported so that it can rotate freely around the hub shaft and the fourth bearing cone which retain a planetary gear. Here, since the carrier is supported by both parts with the planetary gear in between, it is unlikely that the carrier would tilt, and also unlikely for the planetary gear that is supported by the carrier to tilt relative to the sun gear or the internal toothed gear, and thus rotation is efficiently transferred.

In the internal speed changing hub for a bicycle of the fourth embodiment, the first bearing cone that is described in embodiments 1 through 3 is fixed by screwing it into the hub shaft, and the second bearing cone is fixed by pressing it onto the outside of the hub shaft. In this case, since the second bearing cone is fixed by press fitting it into the hub shaft, the fixation structure is simple, and it is also possible to adjust the bearing contact because the first bearing is fixed by screwing it in.

In the internal speed changing hub for a bicycle of the fifth embodiment, the first and second bearing cones that are described in embodiments 1 through 3 are fixed by screwing them into the hub shaft. In this case, since both bearing cones are the fixed by screwing them in, the installation of the bearing cones is simple.

In the internal speed changing hub for a bicycle of the sixth embodiment, the second bearing cone that is described in embodiments 1 through 5 is fixed by screwing them into the hub shaft. In this case, since the installation part of the second bearing cone is smaller than the inner diameter of the carrier, carrier installation is made simple, and the location of the second bearing cone is determined by the difference in height [step] between the carrier installation part and the second bearing cone installation part.

In the internal speed changing hub for a bicycle of the seventh embodiment, the diameter of the arc formed by the contact part between the second bearing cone and the second ball bearings described in embodiments 1 through 6 is larger than the inner diameter of the carrier. In this case, since the diameter of the second bearing cones of the installation part of the second ball bearings of the second bearing can be made large, the quantity of second ball bearings can be increased.

In the internal speed changing hub for a bicycle of the eighth embodiment, the first one-way clutch described in embodiments 1 through 7 has a first clutch pawl installed in the carrier so that it freely stands up and lies down, a first ratchet tooth that can engage and stop the tip of the first clutch pawl when the first clutch pawl is in the standing position. In this case, the one-way clutch of the first one-way clutch pawl system can be simply configured.

In the internal speed changing hub for a bicycle of the ninth embodiment, the second one-way clutch described in embodiments 1 through 8 has a second clutch pawl installed in the driven part so that it oscillates freely, second ratchet teeth provided at separate intervals in the rotational direction on the inside of the drive part that can engage and stop the tip of the second clutch pawl, and it's the clutch control mechanism has a push rod installed so that it moves freely in the axial direction in the center of the hub shaft, a clutch cam that can control the second clutch pawl by moving in response to the movement of the push rod so that its tip is engaged and stopped by the second ratchet teeth in a connected attitude, or the tip is separated [from the second ratchet teeth] in a disengaged attitude, and a second positioning part that positions the ratchet cam on the connected attitude side. In this case, the engagement and disengagement of the second one-way clutch can easily be controlled by means of the push rod.

In the internal speed changing hub for a bicycle of the tenth embodiment, the second bearing cone has a holding part that holds one end of the second positioning part in the hub described in the ninth embodiment. In this case, since the second bearing cone can be used to hold one end of the second positioning part, there is no need to provide a dedicated holding part in order to hold one end of the second positioning part.

In the internal speed changing hub for a bicycle of the eleventh embodiment, the hub described in embodiments 1 through 10 is provided with a first seal material that seals the gap in the first bearing side, and second and third seal materials that seal the gaps in Nos. 3 and 4 bearings. In this case, the penetration of liquids and far materials into the hub can be prevented by the 3 seal materials.

In this invention, since the second bearing cone is separate from the hub shaft, the second bearing can be made of a large diameter, even if the sun gear and hub shaft are formed in one piece, and [therefore] the quantity of second ball bearings can be increased. As a result, the pressure acting on the second bearing cone and second bearing cups is reduced, and curtailment of the service life of the bearings due to high loads can be controlled.

Brief Description of the Figures

Fig. 1    Side view of a bicycle using an embodiment of this invention
Fig. 2    Cutaway view of this internal speed changing hub
Fig. 3    Cross sectional enlarged view of its principle parts
Fig. 4    Cross sectional enlarged view of another embodiment

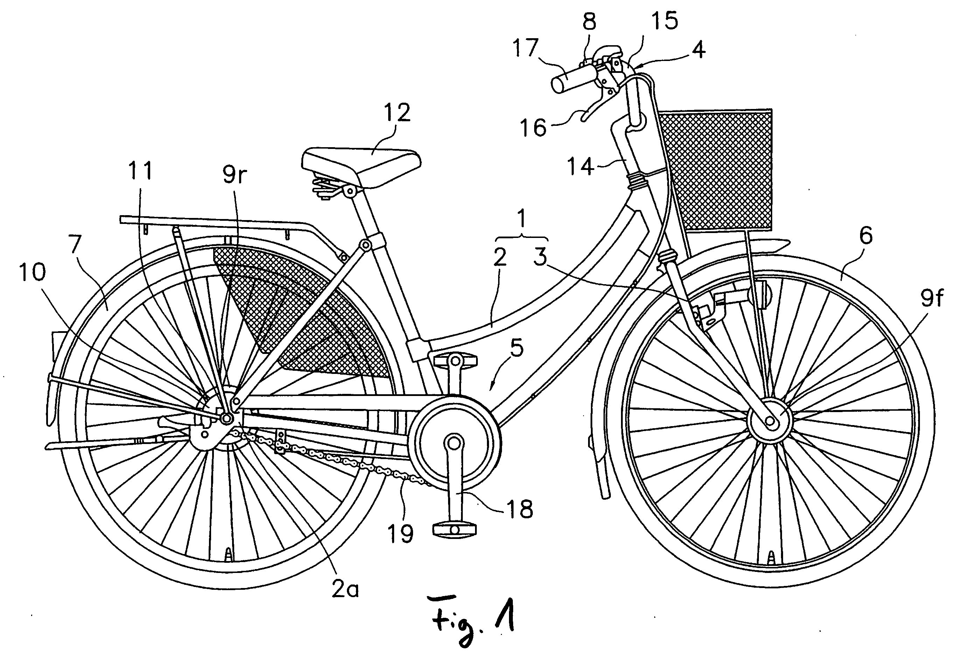

Fig. 1 shows a bicycle using a preferred embodiment of the present invention, and consists of a frame 1 having a frame body 2 and a front fork 3; a handlebar part 4; a drive part 5; a front wheel 6; a rear wheel 7 in which a 2-speed internal speed changing hub 10 is installed; and braking equipment 9f, 9r that brakes the front and rear wheels 6, 7.

The frame 1 is provided with a saddle 12, as well as the handlebar part 4, the front wheel 6 and the rear wheel 7.

The handlebar part 4 consists of handlebar system 14 that is affixed to the top part of the front fork 3 and handlebar 15 are affixed to the handlebar system 14. The rear brake equipment 9r consisting of the brake lever 16 and grip 17 is installed on the right end of the handlebar 15. A speed changing lever 8 to operate the speed changer is installed on the handlebar 15.

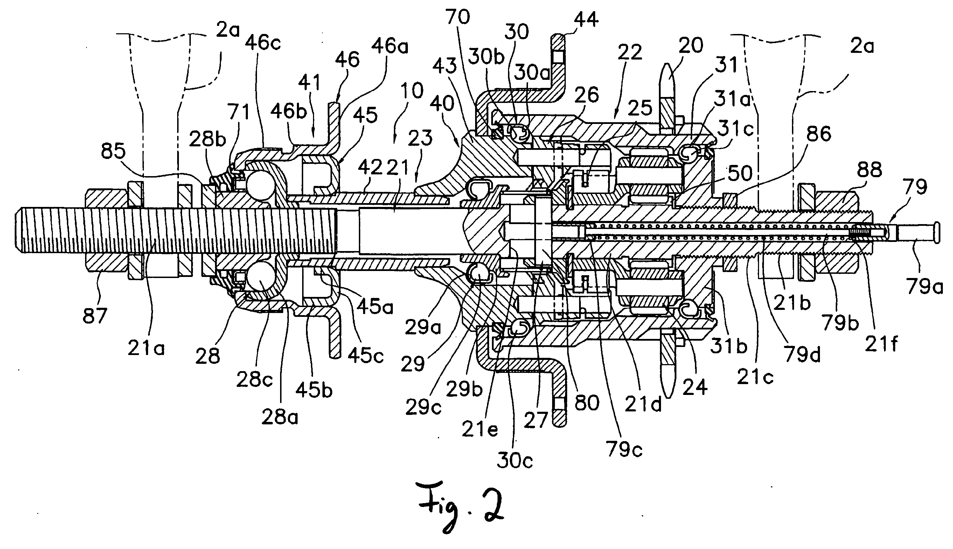

The drive part 5 consists of the gear crank 18 and chain 19 that is mounted on the gear crank 18 provided in the lower portion (hanger part) of the frame body 2; and a sprocket 20 (Fig. 2) which is fitted with an internal speed changing hub 10. A bell crank 11 for operating the speed changer is connected to the speed changing lever 8 by means of the speed changing table (omitted from the drawing).

Constitution of the Internal Speed Changing Hub

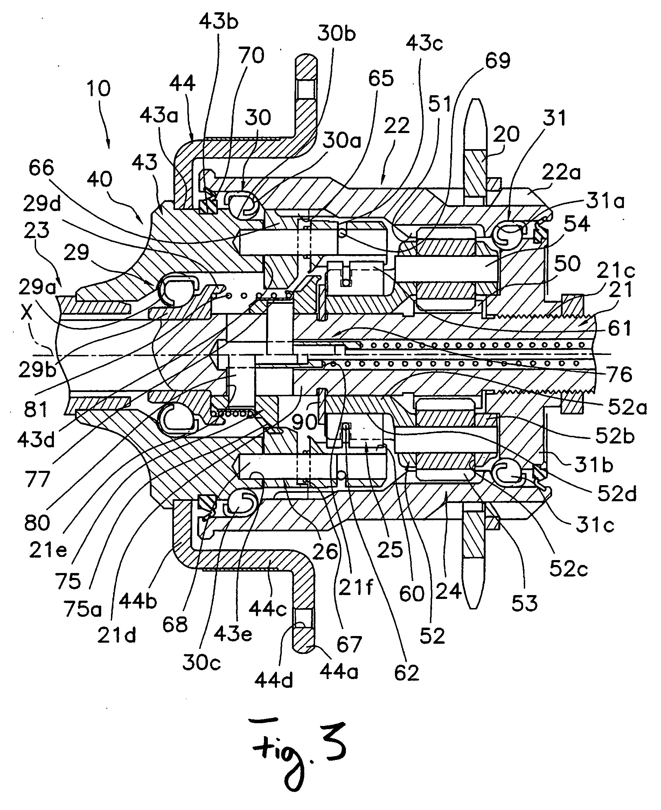

The internal speed-changing hub 10 is a 2-speed hub consisting of reduced speed and direct drive transmission paths. As shown in Figs. 2 and 3, this internal speed changing hub 10 is installed between the rear dropouts 2a of the bicycle frame body 2. The internal speed changing hub 10 has a hub shaft 21 that can be fixed in between the rear dropouts 2a, and is disposed adjoining a tubular drive part 22 part that can rotate around the hub shaft 21 and that can be connected to a rotateable sprocket 20; a driven part 23 that can be connected to the rear wheel 7 and that can rotate around the hub shaft 21; and a drive transmission mechanism to transmit rotation from the drive part 22 to the driven part 23 which consists of a planetary gear mechanism 24 and a one-way clutch 25 that transmits rotation from the planetary gear mechanism 24 to the driven part 23 in the advancing direction only; a second one-way clutch that engages in disengage is the drive part 22 from the driven part 23; a clutch control mechanism 27 that switches the second one-way clutch 26; left/right pairs of first and second bearings 28, 29 installed so that the driven part 23 turns freely around the hub shaft; and left/right pairs of third and fourth bearings 30, 31 installed so that the drive part 22 turns freely around the hub shaft 21.

The hub shaft 21 is a part that is affixed to the rear dropouts 2a of the bicycle frame body 2. First and second male threaded parts 21a, 21b are formed so that both sides of the hub shaft 21 can be affixed to the rear dropouts 2a. Furthermore, a third male threaded part 21c is formed so it has a larger diameter than the adjoining male threaded part 21b. A large diameter part 21d is formed somewhat to the right side of Fig. 2 from the central portion of the hub shaft 21, and a sun gear 50 of the planetary gear mechanism 24 is formed on the right side of the large diameter part 21d. Further, an oblong groove 21e having an oval shape and penetrating the diameter of the large diameter part 21d of the hub shaft 21 is formed to accommodate the clutch control mechanism 27. Moreover, a push rod accommodating hole 21f is formed in the center of the shaft of the hub shaft 21 running from the right end of the shaft toward the oblong groove 21e.

The drive part 22 is a stepped tube that transmits the sprocket 20 rotation. As shown in Fig. 3, the drive part 22 is installed with a non-rotateable sprocket 20 on the outside of its right side, and this sprocket has for example has a sprocket installation part 22a having a spline. Moreover, third and fourth bearing cups 30a, 31a having a quarter arc shape in cross section are formed in the right hand inside of the third and fourth bearings 30, 31; moreover an internal toothed gear 51 is formed in the planetary gear structure 24 on the right side of the fourth bearing 31a; while on the right side of the third bearing 30a, a second one-way clutch 26 having a second ratchet tooth 65 is formed.

As shown in Fig. 2, the driven part 23 is provided with a right hub shell 40, a left hub shell 41, and a pipe-shaped connecting part 42 that connects both sides of the hub shell 40, 41. As shown in Fig. 3, the right hub shell 40 has a generally tubular right shell main part 43 with reduced diameter on the right end disposed on one part of the inside of the drive part 22, and a right hub flange 44 fitted so that it cannot rotate on the right shell main part 43. The right shell main part 43 has a hub flange installation part 43a that may have a right serrations 44 so that the right hub flange cannot rotate; a seal installation groove 43b for the installation of sealing material 70 to seal the gap with the drive part 22; a third bearing cup 30a; and an annular groove 43c to prevent the oscillating pin 68 (described below) from falling out formed on the outside left and right of the right shell main part 43. On the inside of the right shall main part 43, a second bearing 29 second bearing cup 29a and a first one-way clutch 25 constituting a first ratchet tooth 60 are formed. Further, in the intermediate section of the right shell the main part 43, a housing cut-out 43d is formed so that it has an arcuate shape penetrating from the inside to the outside [of the right shell main part 43] in order to accommodate the second one-way clutch. Moreover, an oscillating pin 68 installation hole is formed parallel to the hub shaft 21 that passes through this housing cut-out 43d. The right end of the right shell main part 43 is fixed by press fitting it so that it cannot rotate onto the outside of the connecting part 42. The right hub flange 44 is a tubular part with press-formed brim, and has an outside flange part 44a, an inside flange part 44b, and a tube part 44c that connects both flanges parts 44a and 44b. The inside of the inside flange part 44b is press fitted into the right hub flange installation part 43a. Multiple spoke engaging holes 44d are provided at separate intervals in the perimeter of the outside flange part 44a to engage the spokes (omitted from the drawing).

As shown in Fig. 2, the left hub shell 41 has a left shell main part 45 and a left hub flange 46 that installed so that it cannot rotate on the left shell main part 45. The left shell main part 45 is a press-formed part that is roughly C-shaped in cross section having a disk part 45c that connects a small diameter tube 45a and a large diameter tube 45b, respectively. The inside of the small diameter tube 45a is fitted onto the outside of the connecting part 42. A left hub flange 46, which is a tubular shape having a brim, is installed on the outside of the large diameter part 45b so that it cannot rotate through the use of serrations or other appropriate method.

The left hub flange 46 is a part having an outside flange part 46a that is smaller in diameter than the outside flange part 44a, a stepped tubular part 46b that extends in the axial direction from the inside of the outside flange part 46a and which is press formed so that it is a tubular shape with a brim. Multiple spoke engaging holes (omitted from the drawing) are provided at phased spacing relative to the spoke engaging holes 44d in the perimeter of the outside flange part 44a. The inside of the tubular part 46b is press fitted onto the outside of the left shell main part 45. Further, threaded area 46c for the installation of a non-rotateable rear brake device 9r (omitted from the drawing), is formed on the left outside of the tubular part 46b.

As shown in Fig. 3, the planetary gear mechanism 24 is provided with a planetary gear 50 formed on the hub shaft 21; an internal toothed gear 51 formed on in the inside of the drive part 22; a carrier 52 installed so that it can rotate freely on the large diameter part 21d of the hub shaft 22; and, for example, four planetary gears 53 supported so they rotate freely inside the carrier 52. The carrier 52 is a flange-shaped component with a brim, and has a tubular part 52a that penetrates the inside of the hub shaft 21; and a brim part 52b that extends in the radial direction from the right side of the tubular part 52a. There are two gear housing parts 52c in formed in the brim part 52b so as to penetrate from the inside to the outside. Furthermore, on the outside of the tubular part 52a, a one-way clutch installation location 52d is formed as a depression for the installation of the first one-way clutch 25. And there are four gear shafts 54 affixed to the carrier 52 in order to support the planetary gears 53 so that they can rotate freely. The carrier 52 is supported on the large diameter part 21b of the hub shaft 21 by the tubular part 52a, and at the same time the fourth bearing 31 is supported by the inside of the brim part 52b in the fourth bearing cone described below. In this way, the carrier 52 is unlikely to tilt because the carrier 52 is supported at both ends. The planetary gear 53 meshes with the internal toothed gear 51 and the sun gear 50. Note that a lock ring 90 installed on the hub shaft 21 limits the axial movement of the carrier 52.

With the planetary gear mechanism 24, reduced speed output of rotation from the drive part 22 to the driven part can be effected by outputting with the carrier 52 the input from the internal toothed gear. The following equation expresses the gear reduction (GR) in this case:

$$GR = 1 / (1 + (Zs / Zr))$$

Here, only Zr (the number of teeth in the internal gear 51), and Zs (the number of teeth in the sun gear 50) determine the gear ratio GR. If, for example, the number of teeth Zs in the sun gear 50 is 18T [sic: 15], and the number of teeth Zr in the planetary gear 51 is 46T, then

GR = 1 / (1 + (15 / 46) = 0.735

The first one-way clutch 25 can, for example, be a pawl type, and as shown in Fig. 3 it is provided with a first ratchet tooth 60 formed on the inside of the driven part 23; a first clutch pawl 61 installed so that it freely moves upright or goes down when it is in the engaged or disengaged position with the planetary gear mechanism 24 carrier 52 one-way clutch installation part 52d; and ring-shaped first spring part 62 that puts the first clutch pawl 61 in the upright or down position. The first ratchet tooth 60 is formed with a chisel surface on the inside of the right shell main part 43 of the driven part 23. The first clutch pawl 61 meshes with the tip of the first ratchet tooth and 60 when it is upright in the engaged position. As a result, rotation is transmitted to the driven part 23 in the advancing direction of the carrier 52. The first spring part 62 is coiled around and affixed to the first ratchet pawl 61. The force of the first spring part 62 maintains the first ratchet pawl 61 in a constantly connected upright position in the first one-way clutch 25, and when the carrier 52 rotates in the advancing direction, the rotation is transmitted to the driven part 23. However, when the carrier 23 rotates in the advancing direction faster than the carrier 52, rotation is not transmitted. Moreover, rotation is not transmitted when the carrier 52 moves in the reverse direction.

The second one-way clutch 26 has second ratchet teeth 65 formed on the inside of the drive part 22; may have for example two second clutch pawls 66 that mesh with the second ratchet teeth 65; and a second spring part 67 that positions the second clutch pawl 66. The second ratchet teeth 65 are formed with a chisel shape on the inside of the drive part 22. The second clutch pawl 66 is accommodated in the housing cutout 43d of the right shell main part 43, and the second clutch pawl 66 is in a meshed engaged attitude with the second ratchet teeth 65 in the oscillating pin 68 affixed to the right shall main part 43, and is installed such that it can oscillate freely, separating from the second ratchet teeth 65 in the disengaged attitude. The oscillating pin 68 is prevented from falling out by a lock ring 69 that is installed in an annular groove 43c, as described above. The second spring part 67 may constitute a torsion coil spring that is wound onto the outside of the oscillating pin 68, and it positions the second clutch pawl 66 in a connected attitude. This second one-way clutch 26 transmits rotation only in the advance direction from the drive part 22, transmitting that rotation to the driven part 23, when the second clutch pawl 66 is in the engaged attitude.

The clutch control mechanism 27 is provided with a clutch cam 75 that switches between the second clutch pawl 66 between the engaged and disengaged attitudes; and a moving mechanism 76 that moves the clutch cam 75 in a reciprocating motion the hub axial direction.

The clutch cam 75 is a tubular part provided with a brim, and is installed above the centerline X of the hub as indicated in Fig. 3 in the large diameter part 21 d of the hub shaft 21, and is installed so that it can move freely in the axial direction between the disengaged position indicated below the hub centerline X. The clutch cam 75 is engaged and locked by a rod-shaped key part 80 that is introduced on both sides into an oblong groove 21e. The key part 80 is introduced into the oblong groove 21e and can move freely in the axial direction of the hub. A hub receiver part 77 is installed on the outside of the clutch cam 75. Furthermore, a disk-shaped cam surface 75a is formed so that it protrudes in the radial direction of the clutch cam 75. When this cam surface 75 a contacts the second clutch pawl 66, the second clutch pawl 66 oscillates into the separated position.

As shown in fig. 2, the moving mechanism 76 has a push rod 79 that is installed in the hub shaft 21 push rod housing whole 21 f; the previously-mentioned key part 80 that moves the ratchet cam 75 that makes contact with the tip of the push rod 79 into the disengaged position; and a return spring 81 disposed in a compressed state in between the second bearing 29 and the clutch cam 75. The push rod 79 is pushed and reciprocates in the hub axial direction by a bell crank 11 (Fig. 1) known to practitioners skilled in the art that is installed on the bright side of the hub shaft 21 and is connected by a speed changing table (omitted from the drawing), to a speed changing lever 8. The push rod 79 is provided with a rod-shaped pressure-receiving part 79a that is pushed by the bell crank 11; a shaft part 79b that is screwed into the right end of the pressure-receiving part 79a; a pushing part 79c that pushes the key part 80 that is installed so that it moves freely in the axial direction on the right end of the shaft part 79b; and a coil spring 79b disposed in the compressed state on the outside of the shaft part 79 in between the pressure of receiving part 79a and the pushing part 79c. The push rod 79 advances toward the left in Fig. 3 when it is pushed by the bell crank 11, pushes the key part 80, and the clutch cam 75 moves into the disengaged position. Furthermore, when the bell crank 11 retreats, the clutch cam 75 moves to the engaged position attitude by means of the return spring 81, and the push rod 79 through the intermediary of the key part 80 retreats to the right side of Fig. 3. One end of the return spring 81 (right side), is locked in place by the spring receiver part 77 that is installed in the clutch cam 75, while the other end (left side), is locked in place by the second bearing cone 29b.

As shown in Fig. 2, the first bearing 28 is provided with a first bearing cup 28a installed on the inside of the left hub flange 46; a first bearing cone 28b that is screwed into the first threaded part 21a of the hub shaft 21; and multiple first ball bearings 28c disposed so that the first bearing cup 28a and the first bearing cone 28b can make contact.

The first bearing cone 28b is locked in place by a locknot 85 that is screwed into the first threaded part 21 a. The first bearing cup 28a is a press-formed ring-shaped part, and it is press fitted into the left end of the connecting part 42. Seal material 71 is installed in the gap between the first bearing cone 28 b and the left hub flange 46. In this way, foreign material and liquids are prevented from entering the first bearing 28 from the outside.

The second bearing 29 is provided with a second bearing cup 29a that is formed on the right shell main part 40; a second bearing cone 28b that is press fitted onto the hub shaft; and multiple second ball bearings 29c that are disposed so that the second bearing cup 29a and the second bearing cone 29b can make contact. The second bearing cone 29b is installed in such a way that its position is determined by the limiting step in the large diameter part 21d of the hub shaft 21. Therefore, the inner diameter of the second bearing cone 29b is smaller than the inner diameter of the carrier 52 that is installed on the large diameter area 21d. Annular protrusions 29d are formed in the second bearing cone 29b so that these engage and lock the return spring 81. Moreover, the arcuate diameter formed in the contact portion between the second ball bearings 29c and the second bearing cone 29b is smaller in inner diameter than the carrier 52. In this way, since the second bearing cone 29b and the hub shaft 21 are made as separate parts, the second bearing cone 29 can be made of a larger diameter, even if the sun gear 50 and the hub shaft 21 are formed in one piece, so that the quantity of second ball bearings 29c can be increased. As a result, the pressure between the second of bearing cone 29b and the second bearing cup 29a can be reduced, and it is possible to control reductions in bearing service life due to high loads.

The third bearing 30 is provided with a third bearing cup 30a that is formed in the drive part 22; a third bearing cone 30b that is formed in the right shell main part 43; and multiple third ball bearings 3c that are disposed so that the third bearing cup 30a and the third bearing cone 30b can make contact. Seal material 70 is installed as described above in the gap between the drive part 22 and the right shell main part 43 . In this way, foreign material and liquids are prevented from entering the third bearing 30 from the outside.

The fourth bearing cone 31 is provided with a fourth bearing cup 31a formed in the drive part 22; a fourth bearing cone 31b threaded into the third threaded part 21c in the hub shaft 21; and multiple fourth ball bearings 31c disposed so that the fourth bearing cup 31a and the fourth bearing cone 31b can make contact. The fourth bearing cone is locked in place by a locknot 86 that is screwed into the third threaded part 21c. Seal material 72 is installed as described above in the gap between the drive part 22 and the fourth bearing cone 31b. In this way, foreign material and liquids are prevented from entering the fourth bearing 31 from the outside.

The first-fourth ball bearings 28c-31c are held in place around the perimeter at intervals by a retaining ring (omitted from the drawing). Further, the hub shaft 21 is fixed to the rear dropouts 2 a of the frame by nuts 87, 88 that are threaded onto both ends.

Speed Changing Operation

The internal speed changing hub 10 that is concentrated in this way has a speed reduction drive transmission path comprising a drive part 22—internal toothed gear 50—planetary gear mechanism 24—carrier 52—first one-way clutch 25—driven part 23, and a direct drive transmission path comprising a drive part 22—second one—way clutch 26—driven part 23.

Switching between these two transmission paths is effected by a clutch control mechanism 27. As described above, when the speed control lever 8 is operated, moving the clutch cam 75 to the disengaged position, the second clutch pawl 66 moves to the separated attitude below the hub centerline X indicated in Fig. 3, and the carrier 52 rotation is transmitted via the first one-way clutch to the driven part 23. As a result, rotation from the drive part 22 is reduced and transmitted to the driven part 23 via the speed reduction transmission path. Conversely, when the clutch cam 75 returns to the engaged position, the second clutch pawl 66 returns to the engaged attitude, and the drive part 22 rotation is transmitted unchanged via the second one-way clutch to the driven part 23 via the direct drive transmission path.

Thus, when the internal speed changing hub 10 is assembled in this way, first the carrier 52, in which it the planetary gear 53 is installed, is installed from the left side of the hub shaft 21 and is prevented from falling out by the locking ring 90. Next, a clutch cam 75 is installed from the left side of the hub shaft 21. When the clutch cam 75 is installed, the key part 80 is attached by passing through the long hole groove 21e in the clutch cam 75, and then the spring receiver part 77 is installed to lock the key part 80 in place. With the completion of this work, and after the return spring 81 is installed, the second bearing cone 29b is pressure-fitted onto the hub shaft 21. The second ball bearings 29a are installed, and after the driven part 23 is installed, the planetary gear mechanism 24, the first and second one-way clutches 25, 26, the clutch control mechanism 27, as well as the other bearings are installed, to complete the assembly of the internal speed changing hub 10.

Since the second bearing cone 29b is a part separate from the hub shaft 21, the diameter of the second bearing 29 can be made larger, even if the sun gear 50 is made in one piece with the hub shaft 21, and the quantity of second ball bearings 29c can be increased. As a result, the pressure between the second of bearing cone 29b and the second bearing cup 29a can be reduced, and it is possible to control reductions in bearing service life due to high loads. Moreover, since the carrier 52 is supported so that it can freely rotate with the planetary gear 53 in between the hub shaft 21 and the fourth bearing cone 31b, it is unlikely that the carrier 52 would tilt, or that the planetary gear 53 which is held by the carrier 52 would tilt toward the sun gear 50 or the internal toothed gear 51, and in this way rotation is efficiently transmitted.

Other Embodiments

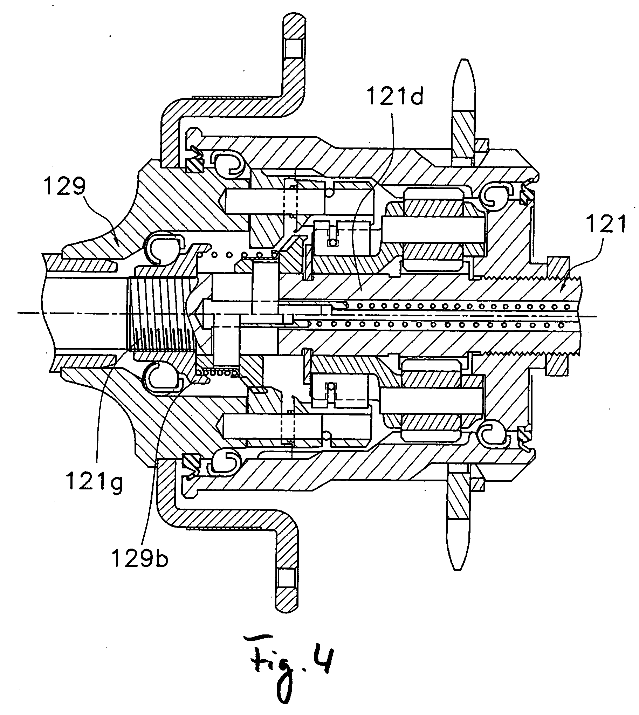

In the above embodiment, although the second bearing cone 29b was press fitted into the hub shaft 21, is also acceptable for the second bearing cone 129b to be screwed onto the hub shaft 21, as shown in Fig. 4. In this case, a fourth threaded part 121g is formed adjacent to the large diameter part 121d of the hub shaft 121, and it is acceptable for the second bearing 129 second bearing cone 129b to be screwed onto the fourth threaded part 121g. Other configurations have similar explanations to that of the previous embodiment, so these are omitted.

In the above preferred embodiment, although the internal speed changing hub presented has to speeds operated by a speed changing lever, the present invention can be applied to speed internal speed changing hubs in which speed changing is done by centrifugal force or in 3-speed internal speed changing hubs, etc.

**Claims**

1. An internal speed changing hub for a bicycle for transmitting the rotation from an input part to an output part, comprising:

    a shaft (21) fixable to a bicycle frame;
    a tubular drive part (22) rotatable around the hub shaft, which can be connected to the input part;
    a driven part (23) that is disposed adjoining the drive part (22) and which can rotate around the hub shaft;
    a drive transmission mechanism including a sun gear integrated with the hub shaft, a planet gear carrier arranged to rotate freely on the hub shaft, at least one planetary gear disposed on the carrier so as to engage the sun gear, and an internal gear provided on the drive part for engaging the at least on planetary gear;
    first and second bearings (28, 29) for mounting the driven part (23) having first and second bearing cones mounted on the hub shaft, first and second bearing cups arranged opposite the first and second bearing cones, respectively, and plural first and second ball bearings disposed between the first and second bearing cones and first and second bearing cups so as to allow free rotation of the driven part around the hub shaft;
    third and fourth bearings (30,31) for mounting the drive part (22) for free rotation around the hub shaft.

2. The internal speed changing hub of claim 1, wherein the driven part (23) is disposed to radially overlap a portion of the drive part (22), and wherein the internal gear is formed as a ring gear on the inner circumference of the drive part.

3. The internal speed changing hub of claim 1 or 2, wherein the third and fourth bearings (30, 31) have a third bearing cone provided in the driven part, a fourth bearing cone installed in the hub shaft so it is freely removable, third and fourth bearing cups disposed so they are separated by an interval in the drive part, and plural third and fourth ball bearings installed so that the third and fourth bearing cones and the third and fourth bearing cups can make contact,

    wherein the carrier is supported so that it holds the planetary gear and rotates freely between the hub shaft and the fourth bearing cone.

4. The internal speed changing hub of claims 1, 2 or 3, wherein the first bearing cone is screwed onto the hub shaft, and the second bearing cone is press-fitted to the outer surface of the hub shaft.

5. The internal speed changing hub of claims 1, 2 or 3, wherein the first and second bearing cones are screwed onto the hub shaft.

6. The internal speed changing hub of any one of the claims 1 through 5, wherein the inner diameter of the second bearing cone is smaller than the innermost diameter of the planet gear carrier.

7. The internal speed changing hub of any one of the claims 1 through 6, wherein the diameter of a contact arc formed by the contact area between the second bearing cone and the second ball bearing is larger than the innermost diameter of the planet gear carrier.

8. The internal speed changing hub of any one of the claims 1 to 7, wherein the drive transmission mechanism further includes,

    a first one-way clutch that transfers carrier rotation in one direction to the driven part;
    a second one-way clutch disposed between the drive part and the driven part to engage or disengage the drive part from the driven part; and
    a clutch control mechanism to engage or disengage the drive part from the driven part.

**9.** The internal speed changing hub of claim 8, wherein the first one-way clutch includes

a first clutch pawl in the carrier that freely stands and lies down;

a first clutch teeth that are provided at separate intervals in the rotational direction of the driven part and that can engage and stop the tip of the first clutch pawl when it stands up; and

a first positioning part that positions the first clutch pawl toward the upright position.

**10.** The internal speed changing hub of claim 8 or 9, wherein the second one-way clutch includes a second clutch pawl installed in the driven part so it moves freely and second ratchet teeth provided at separate intervals in the rotational direction on the inside circumference of the drive part that can engage and stop the tip of the second clutch pawl.

**11.** The internal speed changing hub of claim 8, 9 or 10, wherein the clutch control mechanism comprises

a push rod installed so that it freely moves in the axial direction in the center of the hub shaft;

a clutch cam for controlling the second clutch pawl by moving in response to the movement of the push rod so that its tip is engaged and stopped by the second ratchet teeth in a connected condition, or the tip is separated from the second ratchet teeth in a disengaged condition; and

a second positioning part that positions the ratchet cam on the connected side.

**12.** The internal speed changing hub of any one of the claims 1 to 11, wherein the second bearing cone has a holding part that holds one ends of the second positioning part.

**13.** The internal speed changing hub of any one of the claims 1 to 11, wherein a seal material is provided for sealing the gap in the first, third and fourth bearings.

Fig. 1

Fig. 2

EP 1 555 202 A2

Fig. 3

Fig.4